# EUROPEAN PATENT SPECIFICATION

(11) **EP 0 607 317 B1**
(45) Date of publication and mention of the grant of the patent: **01.03.1995**
(21) Application number: 92921987.1
(22) Date of filing: 15.10.1992
(51) Int. Cl.: B65G 17/02, B65G 15/08

(54) **BELT CONVEYOR**
GURTFÖRDERER
CONVOYEUR A BANDE

(30) Priority: 16.10.1991 GB 9121975
(43) Date of publication of application: 27.07.1994
(73) Proprietor: DUNLOP-ENERKA B.V., NL-9200 AA Drachten (NL)
(72) Inventor: KANIS, Harm Dunlop-Enerka BV, NL-9200 AA Drachten (NL)
(74) Representative: Badger, John Raymond
(86) International application number: EP9202383
(87) International publication number: WO9308107

(56) References cited:
- EP-A- 0 345 193
- WO-A-87/03565
- FR-A- 2 637 272
- GB-A- 970 253
- GB-A- 2 192 850
- Patent Abstracts of Japan, unexamined applications, M Field, vol. 4, no. 60, 06May 1980, The Patent Office Japanese Government,

## Description

This invention relates to a belt conveyor of the so-called bag or sealed type in which a conveyor belt is deflected to adopt a substantially tubular form along at least a part of the load carrying zone of the conveyor such that transported material is restrained from contaminating or being contaminated by the surrounding environment. The invention relates also to a conveyor belt far use in the belt conveyor of the invention. Conveyors and conveyor belts of the types as defined in the preamble of claims 1 and 10 are known from EP-A-0 345 193 or FR-A-2 637 272.

Belt conveyors of the so-called bag or sealed type have been known for many years and one type using a flexible conveyor belt of a kind provided with a pair of edge formations for support of the belt is described in the specification of GB Patent Specification 970253. That belt conveyor utilises a belt of a simple construction having a single pair of edge formations provided one each adjacent a respective edge of the belt. According to the teaching of another patent publication relating to sealed type conveyors, namely International Patent Publication WO 87/03565 in the name of Scaniainventor AB the belt conveyor described in GB Patent Specification 970253 possesses certain disadvantages, which the invention of the aforementioned international publication claims to overcome.

The specification of International Patent Publication WO 87/03565 describes and claims a belt conveyor which utilises a belt of a construction in which a longitudinal rib formation is provided at one edge of the belt on a first face of the belt and another longitudinal rib formation is provided adjacent the other edge of the belt at the opposite face of the belt. The belt conveyor therefore requires use of a conveyor belt which is complicated to manufacture.

The present invention seeks to provide a conveyor belt and a belt conveyor which utilises a conveyor belt of a construction which allows relative ease of manufacture and which can readily be guided between a substantially tubular and a substantially planar configuration.

In accordance with one of its aspects the present invention provides a belt conveyor comprising an endless flexible conveyor belt having a first, load carrying surface and a pair of primary edge formations each provided substantially adjacent respective longitudinal edges of said first surface of the belt and each comprising an embedded longitudinally extending tension resisting reinforcement, a secondary edge formation provided on said first surface proximate a first of said primary edge formations and spaced therefrom at least in part to define a longitudinally extending retention groove whereby when the belt is deformed to adopt a substantially tubular configuration the second other of the primary edge formations interengage at least in part with said retention groove with the first and second primary edge formations having a substantially common neutral plane of bending, and belt support means provided at least at intervals along the length of the conveyor at least in a load carrying zone to engage edge regions of the belt to hold the second of the primary edge formations in said retention groove and to co-operate with the edge formations to provide support for the belt when in a tubular configuration.

The invention envisages that in a preferred construction the belt support means will be provided at intervals along the length of the belt conveyor rather than being of a longitudinally continuous type.

The belt support means may comprise primary support means to engage the first of the primary edge formations and to support at least a substantial part of the weight of the belt and secondary support means, also provided at least at intervals along the length of the conveyor, to restrain transverse movement of the second of the primary edge formations from the retention groove whereby vertical load acting downwardly on the second of the primary edge formations is carried at least in part by said secondary edge formation. Where the support means are each provided at intervals it is preferred that the primary and secondary support means be provided at positions which are substantially longitudinally coincident along the length of the belt conveyor.

The reinforcement structure of each primary edge formation may be comprised by, for example, a substantially discrete reinforcing member, such as a high tensile member of single or multi-filamentary type which may be embedded in rubber or other flexible polymeric material of the edge formation. Suitable materials for a substantially discrete reinforcing member include steel wire and synthetic materials such as aromatic polyamide fibres, e g an aramid fibre such as Kevlar. Alternatively the reinforcement structure may for example be comprised by a plurality of longitudinally extending layers of reinforcing material (e g a woven reinforcing fabric) embedded in rubber or other flexible polymeric material of a primary edge formation.

The secondary edge formation also may incorporate a longitudinally extending tension resisting reinforcement structure and that reinforcement structure may be of a kind such as specifically envisaged herein or otherwise suitable for the primary edge formations.

Where belt support means causes the conveyor belt to follow a curved path in a substantially tubular configuration preferably said support means is arranged to support the edge formations such that the respective neutral planes of bending of at least the primary edge formations lie at substantially the same distance from the centre of curvature of the curved path of the belt conveyor. (The term "neutral plane" as used herein relates to a longitudinally extending plane which lies parallel with the plane of the belt when in a flattened configuration and at which the edge formation neither experiences extension nor compression forces when the belt is curved about an axis extending transversely of the belt).

One preferred cross-sectional shape for the edge formations is that of a truncated V-shape but other shapes such as a square section may be used. The second primary edge formation may have an inward facing side face which may be of an angle of inclination corresponding to the angle of inclination of a face of the secondary edge formation which faces outwards towards the first of the primary edge formations.

An auxiliary edge formation may be provided between the first of the primary edge formations and the secondary edge formation and may be spaced from the secondary edge formation to define said retention groove for accommodating the second of the primary edge formations. Preferably the auxiliary edge formation extends from the working surface of the belt by the same distance as the secondary edge formation. The upper surface of the auxiliary edge formation may be planar or may be profiled, for example to be provided with a tooth-like profile to engage corresponding tooth-like formations provided on the belt surface between the second of the primary formations and the associated edge of the conveyor belt.

The first primary edge formation may be arranged for support by means such as a grooved pulley or a roller such as an inclined cylindrical roller. Additionally a roller or like location means being provided to ensure that the first primary edge formation is retained captive. The second of the primary edge formations may be retained captive in the retention groove by a pair of rotatable location means between which the interengaging belt edges are arranged to pass. One of those location means may be the same location means as employed to retain the first primary edge formation captive in a grooved roller or like means.

In an alternative embodiment the interengaging edge formations, comprising at least the first and secondary primary edge formations and the secondary edge formation may be retained within a single grooved pulley by a location means, such as a roller, which provides support to both the first of the primary edge formations and the secondary edge formation. In that case, the belt material adjacent the second of the primary edge formations may incorporate additional reinforcement adapted to provide a high fatigue life where the belt material is angled to pass over the radially outer edge of a grooved pulley.

The conveyor belt may be caused to move in conventional manner, for example by providing that one or more of the grooved pulleys or a rotatable location means is rotated from an external power source, such as an electrical drive motor.

In accordance with another of its aspects the present invention provides for use in a belt conveyor an conveyor belt having a first, load carrying surface and a pair of primary edge formations provided substantially adjacent respective longitudinal edges of the belt, a secondary edge formation provided on said load carrying surface proximate a first of the primary edge formations and spaced therefrom to define a longitudinally extending retention groove for accommodating the other, second of the primary edge formations when the belt is deformed along its length to adopt a substantially tubular configuration, each of the first and second primary edge formations comprising a longitudinally extending embedded tension resisting reinforcement structure arranged such that when the belt is in said tubular configuration with the second of the primary edge formations located in said longitudinally extending retention groove the neutral plane of bending of the first of the primary edge formations lies at substantially the same distance from the second, reverse surface of the belt underlying the first of the primary edge formations and the secondary edge formation as the spacing of the neutral plane of bending of the second of said primary edge formations from said second surface.

An auxiliary formation may be provided between the first of said primary edge formations and the secondary edge formation and said retention groove for accommodating the second of the primary edge formations may be disposed between said auxiliary formation and the secondary edge formation.

The secondary edge formation, and the auxiliary edge formation when provided, may incorporate a longitudinally extending tension resisting reinforcement structure. Preferably any such additional reinforcement structure has a neutral plane of bending which lies at the same spacing from the second belt surface adjacent said first of the primary edge formations and secondary formation as the spacing from that surface of the neutral plane of bending of the reinforcement structure of the first of the primary edge formations.

Preferably the reinforcement structures of the edge formations provide a major and preferably substantially all of the tension resisting reinforcement structure of the belt. Thus the central load carrying portion of the belt which is transversely curved when the belt adopts a tubular configuration may be substantially bereft of tensile reinforcement in the longitudinal direction thereby to avoid undue restriction on flexibility especially when the belt is caused to follow a curved path.

A preferred cross-sectional shape for the edge formations is that of a truncated V but it is to be appreciated that other cross-sectional shape as known to those skilled in the art may be employed.

The belt may be provided with load control means to stabilise and restrict undesirable movement of transported material especially when the belt departs from a horizontal path to follow an inclined course. The load control means may be in the form of structure secured to that side surface of the secondary edge formation which faces generally inwards towards the second of the primary edge formations when the belt is in a flat condition.

Embodiments of the present invention will now be described, by way of example only, with reference to the accompanying diagrammatic drawings in which:-
- Figure 1: is a cross-sectional view of a belt conveyor in accordance with the present invention, with the belt in a tubular configuration;
- Figures 2 and 3: show modified forms of the embodiment of Figure 1;
- Figure 4: shows a simplified version of the belt conveyor of Figure 1;
- Figure 5: shows a cross-sectional view of a belt conveyor in accordance with another embodiment of the present invention;
- Figure 6: is a view similar to that of Figure 5 but showing a modified construction;
- Figure 7: shows a modified construction of the belt conveyor of Figure 1, and
- Figure 8: shows an end roller for turning the conveyor belt through a curved path.

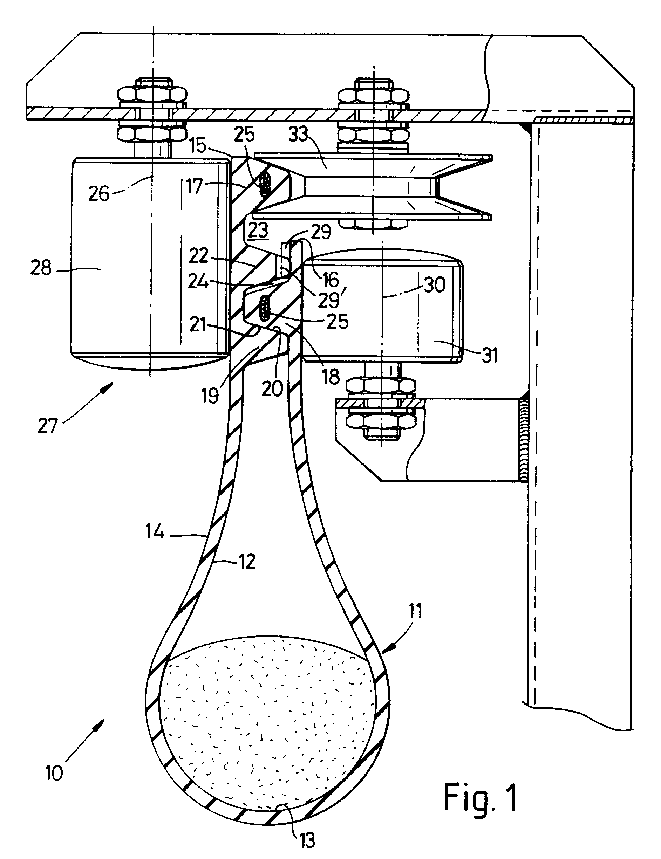

A belt conveyor 10 (see Figure 1) in accordance with the present invention comprises a transversely flexible conveyor belt 11 supported by a series of roller assemblies 27 described in more detail below and provided at intervals, typically two to three metres apart, along the length of the belt over at least a load carrying zone.

The belt 11 is of reinforced rubber and has a first, working surface 12 the central portion 13 of which is transversely deformable to allow the belt substantially readily to adopt the tubular configuration as shown. The belt has a second, reverse surface 14 the edge regions of which co-operate with the roller assembly 27 to support the belt and to maintain it in or guide it to and from the closed, tubular configuration.

The belt 11 has four longitudinally extending rib-like formations provided on the first, working surface 12. Three are provided in the region of a first belt edge 15 and the other in the region of the second belt edge 16. Two of the formations are primary edge formations, a first 17 being provided directly adjacent the first belt edge 15 and the other, second 18 being provided close to but slightly spaced from the second belt edge 16. Each of the primary edge formations 17,18 has embedded therein and bonded thereto a reinforcing assembly 25 of for example multi-strand high tensile steel reinforcing wires arranged side by side to lie in a plane parallel with a respective edge region of the belt's reverse surface 14.

The region of the first belt edge 15 is provided also with a secondary edge formation 19 having a bearing face 20 to support a confronting surface 21 of the second 18 of the primary edge formations. Additionally an auxiliary edge formation 22 is provided between and spaced from the formations 17 and 19 to define a pair of longitudinally extending grooves 23,24.

Each edge formation is of a substantially similar truncated V-shape in cross-section and the groove 24 between the edge formations 19 and 22 is arranged as a retention groove to freely accommodate the second 18 of the primary edge formations.

The edge formations 17,18,19 and 22 each extend for the same distance above the belt working surface 12.

Each wire reinforcing assembly 25 is positioned mid-way between the outer face of its associated edge formation and the neighbouring region of the belt surface 12. Thus as illustrated the two reinforcing assemblies of the first and secondary primary edge formations lie at substantially the same distance from the rotational axis 26 of the roller assembly 27. Accordingly, with the axis 26 vertically disposed the neutral planes of bending of the two primary edge formations are vertically aligned. The other edge formations 19,22 may incorporate tension resisting reinforcement (not shown) and that preferably has a neutral plane of bending coincident with that of the primary edge formations.

The belt surface 12 lying outwards of the second 18 of the primary edge formations optionally may be formed with a toothed profile 29 and a corresponding toothed profile is provided on the outer face 29' of the auxiliary edge formation 22. When the belt is in a closed configuration as illustrated in Figure 1 the respective teeth formations interengage and thus serve to restrain relative longitudinal movement of the edge regions.

One of the roller assemblies 27 will now be described in more detail. The region of the belt surface 14 adjacent the edge 15, and underlying the group of three formations 18,19 and 22 is supported by a cylindrical roller 28 which rotates about the axis 26.

The edge region of the face 14 adjacent edge 16 is supported by another cylindrical roller 31 which rotates about an axis 30. The axis 30 is substantially parallel with the axis 26 and spaced therefrom such that the belt edges between the rollers 28,31 may be maintained in close contact, optionally under light compression with the second of the primary edge formations held in the retention groove 24 and with the toothed profiles 29,29' in engagement.

The roller assembly also comprises a grooved pulley 33 which has a groove profiled to conform with the cross-section of the first of the primary edge formations 17 and to hold the edge region 15 of the belt firmly against the roller 28. The pulley 33 and roller 31 are rotatable about independent axes movable relative to one another whereby the transverse load applied to respective edge regions of the belt may be selectively varied.

At transition regions where the belt moves from a closed configuration as shown in Figure 1 to an open configuration for loading and unloading the first 17 of the primary edge formations may be continually supported at intervals by a grooved pulley and a cylindrical roller such as the components 33 and 28 respectively shown in Figure 1. The second 18 of the primary edge formations may be supported by another grooved pulley, not shown, arranged at least in a transition zone to lie between the belt edges thereby to be able to guide the second edge 18 away from or towards the first edge region 15 whilst maintaining support of that second edge region 16 in co-operation with a cylindrical roller such as the aforedescribed roller 31.

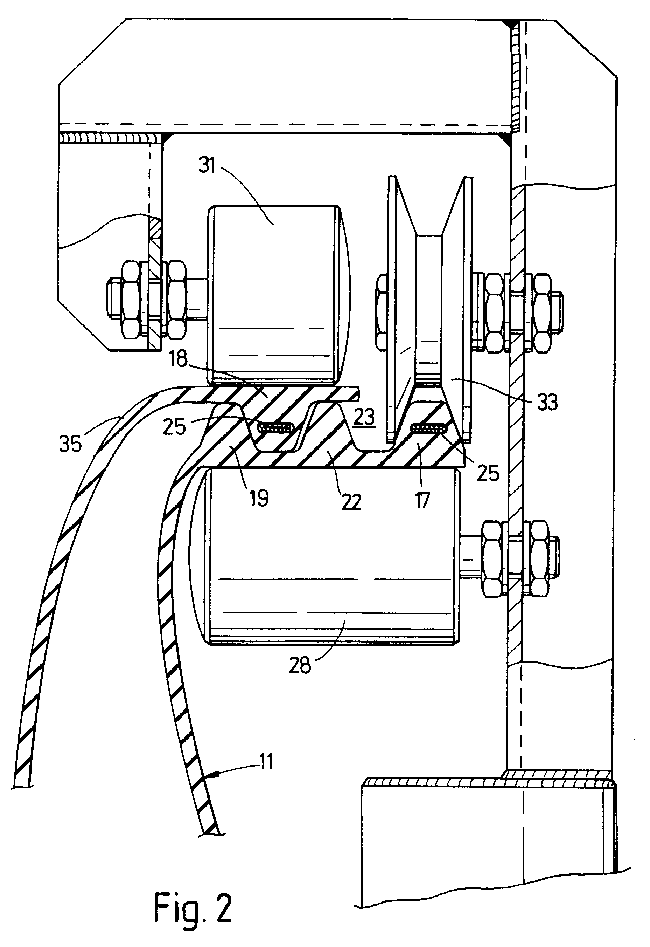

It is not essential that the interposed edge formations 18, 19 and 22 and the edge formation 17 be arranged in a substantially vertically superimposed manner as shown by Figure 1. An alternative configuration is shown in Figure 2 in which said formations lie substantially side by side in a horizontal direction; in this case the belt region 35 neighbouring the edge formation 18 may incorporate a reinforcement to provide strength for resisting undue stress of the flexible material of that region of the belt 11.

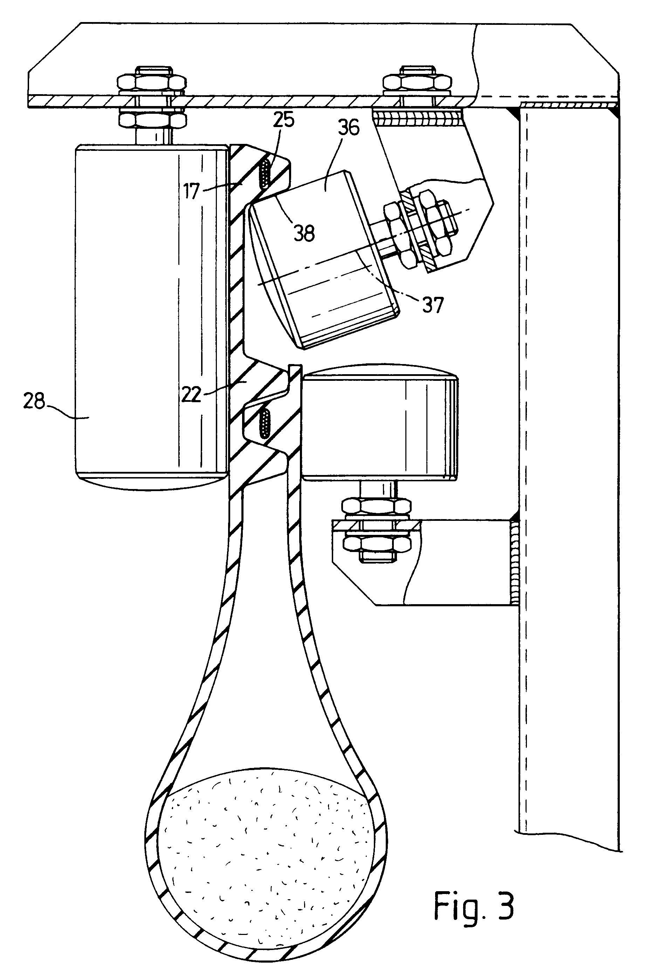

In another modification of the embodiment of Figure 1, shown in Figure 3, the grooved pulley 33 is replaced by a support cylinder 36 which rotates about an inclined axis 37 and which bears against an underside surface 38 of the edge formation 17. To accommodate the greater size of the cylinder 36 in a vertical direction as compared with the size of the pulley 33 of Figure 1 the belt edge formations 17 and 22 are spaced further apart and the support cylinder 28 is of a correspondingly greater axial extent.

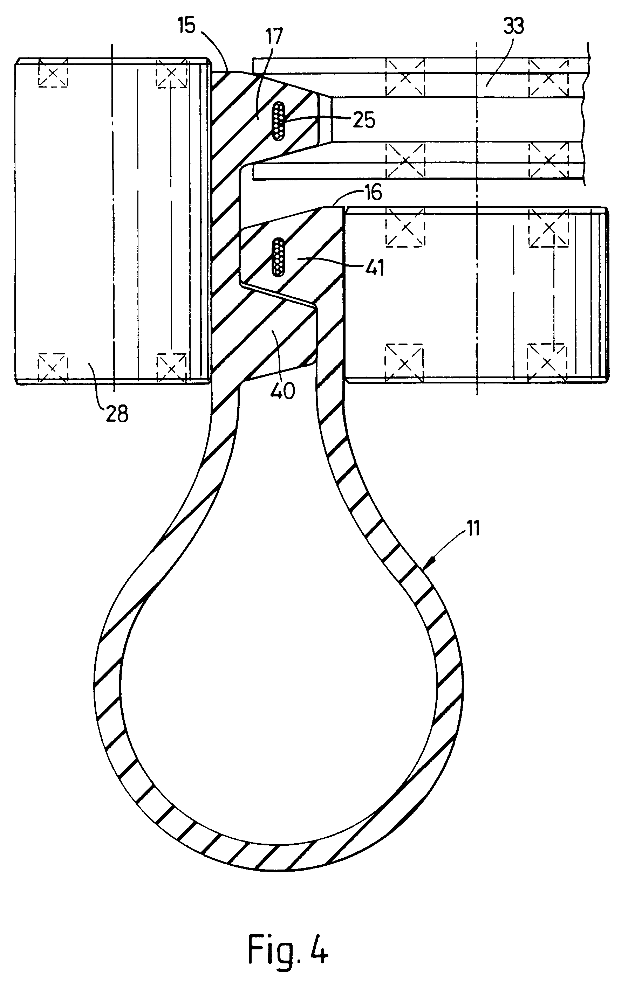

Figure 4 shows an embodiment of the invention in which the aforedescribed auxiliary edge formation 22 is omitted.

In this construction the second 41 of the primary edge formations extends to immediately adjacent the second belt edge 16. As in Figure 1, the support roller 28 is of sufficient axial extent to provide underlying support for substantially the whole of the width of the base of the secondary edge formation 40.

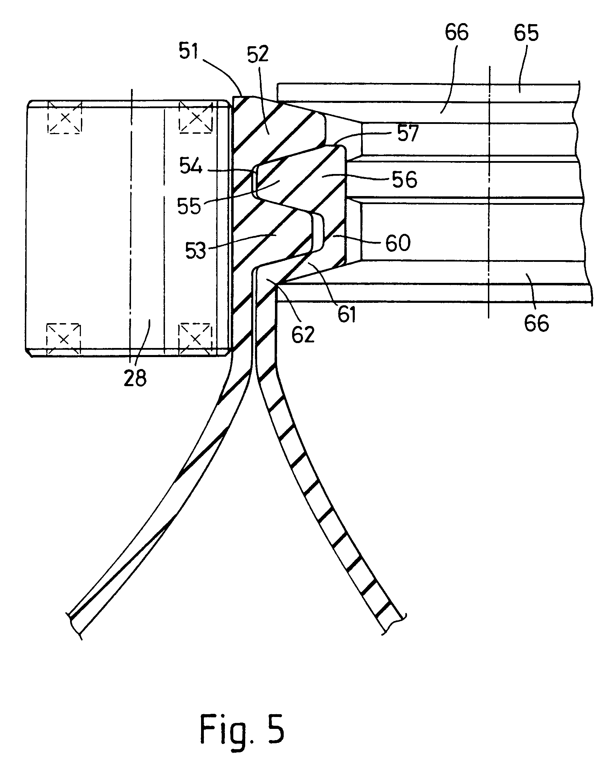

Figure 5 shows another embodiment of the present invention in which one edge region 51 is provided with a first primary edge formation 52 immediately adjacent that edge and inwards thereof a secondary edge formation 53 spaced therefrom to define a longitudinally extending retention groove 54. The other edge region 55 of the belt is provided with a second 56 primary edge formation adapted immediately adjacent the belt edge 57 for location within the longitudinally extending groove 54. The material of the belt immediately adjacent the second edge formation 56 is moulded to an angled configuration in cross-section, comprising a vertically downwardly extending portion 60 and an inclined and downwardly extending portion 61 from the lower end 62 of which the central flexible part of the belt body extends. The pre-moulded angled section 61,62 contains an embedded reinforcement structure adapted to resist deformation of that shape when portions of the belt lie unsupported between successive support rollers.

In this embodiment the aforedescribed assembly of a grooved pulley 33 and a cylindrical support roller 31 is replaced by a single grooved pulley 65 the inclined sidewalls 66 of which bear respectively against a side face of the first 52 of the primary edge formations and the underside surface of the belt in the vicinity of the downwardly inclined portion 62. The underside of the belt in the vicinity of the other edge region is supported, as in the case of the first embodiment of the invention, by a cylindrical support roller 28.

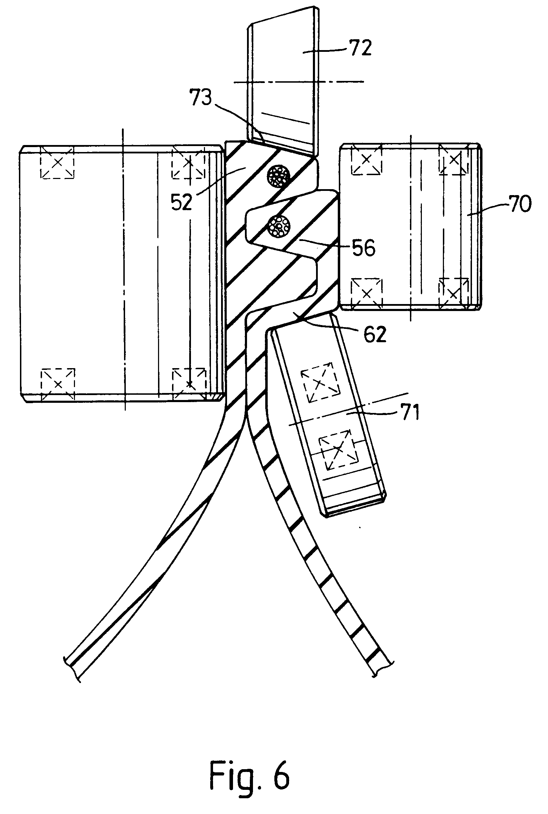

It will be appreciated that it is not essential to use a single grooved roller in the configuration of Figure 5. Thus, for example, in an alternative use may be made of a combination of three separately rotatable components (see Figure 6), one component being a roller 70 to support the underside of the belt below the second of the primary edge formations 56, a first inclined roller 71 to support the underside of the belt in the region of the downwardly inclined portion 62 and a second roller 72 adjacent the inclined outer surface 73 of the first 52 of the primary edge formations to resist any tendency for upward movement of the interengaged belt edges.

In the configurations of Figures 1 to 4 the belt is maintained spaced apart in the region of the interengaged edge formations by a distance corresponding to the height of the edge formations. This advantageously allows the belt to contain a usefully greater volume of material than in a configuration in which a belt of the same transverse dimensions is arranged with confronting portions of its inner load carrying surface to come into direct contact as in the configurations of Figures 5 and 6.

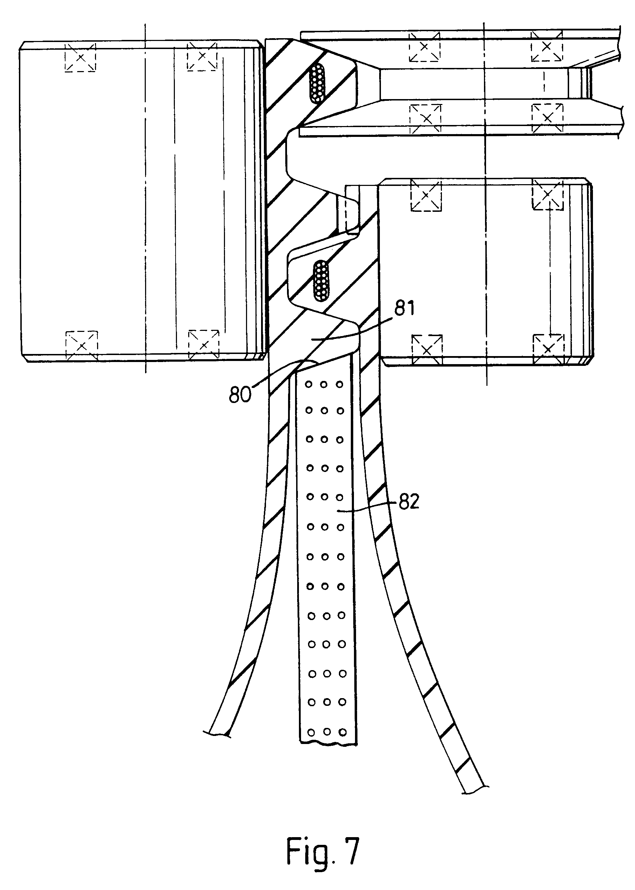

The spacing of the confronting portions of the belt working surface may be employed usefully to allow load control means 82 to be provided within the conveyor belt envelope for example by attachment to a side face 80 of the secondary edge formation 81 (see Figure 7). The load control means 82 may comprise for example a sheet of perforate material or, for example, a series of longitudinally spaced rigid baffles, which may be hingedly secured to the edge of the secondary formation, the precise construction of the load control means being selected having regard to the material to be transported and the extent to which the conveyor belt path deviates from a horizontal rectilinear orientation.

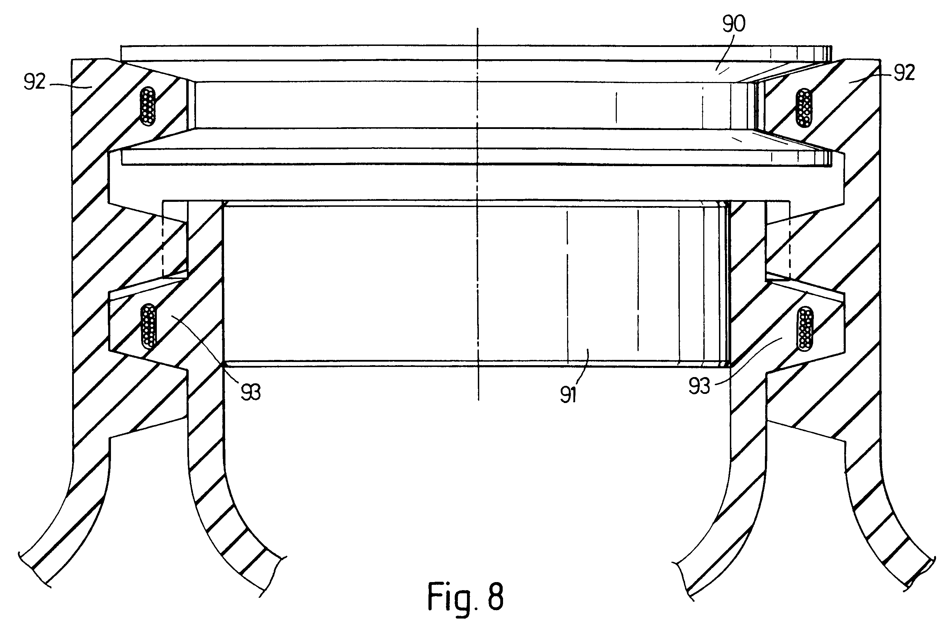

Figure 8 shows a turn-round grooved pulley 90 and roller 91 (for convenience each shown as having a smaller diameter than that likely usually to be employed) to engage first and second edge regions 92,93 respectively of a belt when in a tubular configuration. The first edge region 92 is arranged radially outwards of the second edge region 93, but at another turn-round the first edge region may be arranged radially inwards.

## Claims

1. A belt conveyor (10) comprising an endless flexible conveyor belt (11) having a first, load carrying surface (12) and a pair of primary edge formations (17,18) provided substantially adjacent respective longitudinal edges (15,16) of the belt, and belt support means (27) provided at least at intervals along the length of the conveyor (10) at least in a load carrying zone to engage edge regions (15,16) of the belt and to co-operate with the edge formations (17,18) to provide support for the belt when in a tubular configuration, characterised in that said primary edge formations (17,18) are each provided at respective longitudinal edge regions (15,16) of said first surface (12) of the belt (11) and each comprise an embedded longitudinally extending tension resisting reinforcement (25), a secondary edge formation (19) being provided on said first surface (12) proximate a first (17) of said primary edge formations and spaced therefrom at least in part to define a longitudinally extending retention groove (24) whereby when the belt (11) is deformed to adopt a substantially tubular configuration the other, second (18) of the primary edge formations interengage at least in part with said retention groove (24), and the first and second primary edge formations (17,18) having a substantially common neutral plane of bending when the belt (11) is caused to follow a curved path whilst in a substantially tubular configuration.

2. A belt conveyor according to claim 1 characterised in that the conveyor belt (11) comprises an auxiliary edge formation (22) between the first (17) of the primary edge formations and the secondary edge formation (19), said retention groove (24) being defined by a space between the auxiliary and the secondary edge formations (22,19).

3. A belt conveyor according to claim 1 or claim 2 characterised in that the belt support means (27) comprises a primary support means (33) to engage the first (17) of the primary edge formations and support at least a substantial part of the weight of the belt and secondary support means (31) to restrain transverse movement of the second (18) of the primary edge formations from said retention groove (24).

4. A belt conveyor according to claim 3 characterised in that each of said primary and secondary support means (33,31) are provided at intervals along the length of the conveyor belt at positions which are substantially longitudinally coincident.

5. A belt conveyor according to claim 3 or claim 4 characterised in that the primary support means comprises an inclined roller (36) arranged to support the first primary edge formation (17) and a second roller (28) or like location means is arranged to retain said primary edge formation (17) against said inclined roller (36).

6. A belt conveyor according to any one of claims 3 to 5 characterised in that the second (18) of the primary edge formations is retained captive in the retention groove (24) by a pair of rotatable location means (28,31) between which the interengaging belt edges (15,16) are arranged to pass.

7. A belt conveyor according to claim 1 or claim 2 characterised in that the interengaging edge formations (52,53,56) are retained within a single grooved pulley (65) by a location means (28) which provides support to both the first (52) of the primary edge formations and the secondary edge formation (53).

8. A belt conveyor according to any one of the preceding claims characterised in that the secondary belt edge formation (19) comprises a longitudinally extending reinforcing structure adapted to resist tensile load.

9. A belt conveyor according to any one of the preceding claims characterised in that when the belt (11) is in a tubular configuration profiled confronting surfaces (29,29') of the edge regions interengage to restrain relative longitudinal movement of said edge regions.

10. A conveyor belt (11) for use in a belt conveyor comprising a first, load carrying surface (12) and a pair of primary edge formations (17,18) provided substantially adjacent respective longitudinal edges (15,16) of the belt, characterised in that a secondary edge formation (19) is provided on said load carrying surface (12) proximate a first (17) of the primary edge formations and spaced therefrom to define a longitudinally extending retention groove (24) for accommodating the other, second (18) of the primary edge formations when the belt is deformed along its length to adopt a substantially tubular configuration, and each of the first and second primary edge formations (17,18) comprising a longitudinally extending embedded tension resisting reinforcement structure (25) arranged such that when the belt is in said tubular configuration with the second (18) of the primary edge formations located in said longitudinally extending retention groove (24) the neutral plane of bending of the first (17) of the primary edge formations lies at substantially the same distance from the second, outer surface (14) of the belt underlying the first (17) of the primary edge formations and the secondary edge formation (19) as the spacing of the neutral plane of bending of the second (18) of said primary edge formations from said second surface (14).

11. A conveyor belt according to claim 10 characterised in that an auxiliary edge formation (22) is provided between the first (17) of the primary edge formations and the secondary edge formation (19) to define therebetween said retention groove (24).

12. A conveyor belt according to claim 10 or claim 11 characterised in that the conveyor belt comprises an edge formation (17,18) of truncated V- shape in cross-section.

13. A conveyor belt according to any one of claims 10 to 12 characterised in that said reinforcement structures (25) of the edge formations provide at least a major proportion of the tension resisting reinforcement structure of the belt.

14. A conveyor belt according to any one of claims 10 to 13 characterised in that it has secured thereto load control means (82) arranged in use to stabilise and restrict undesirable movement of transported material when the belt is in a tubular configuration.

15. A conveyor belt according to claim 14 characterised in that said load control means (82) depends from the secondary edge formation (81).

## Patentansprüche

1. Bandförderer (10), enthaltend ein endloses biegsames Förderband (11) mit einer ersten, lasttragenden Fläche (12) und mit zwei primären Randgebilden (17, 18) im wesentlichen angrenzend an die jeweiligen Längsränder (15, 16) des Bands, und enthaltend eine Bandtrageinrichtung (27), die wenigstens in Abständen längs der Länge des Förderers (10) wenigstens in einer Lasttragzone vorgesehen ist zum Ergreifen von Randbereichen (15, 16) des Bands und zum Zusammenarbeiten mit den Randgebilden (17, 18) für ein Tragen des in einem rohrförmigen Zustand befindlichen Bands,
dadurch **gekennzeichnet**,
daß die primären Randgebilde (17, 18) jeweils an entsprechenden Längsrandbereichen (15, 16) der ersten Fläche (12) des Bands (11) vorgesehen sind und jeweils eine eingebettete, sich in Längsrichtung erstreckende, zugfeste Verstärkung (25) enthalten, wobei in Nähe eines ersten (17) der primären Randgebilde und wenigstens teilweise im Abstand hiervon auf der ersten Fläche (12) ein sekundäres Randgebilde (19) vorgesehen ist zur Bildung einer sich in Längsrichtung erstreckenden Haltenut (24), wodurch das andere, zweite (18) der primären Randgebilde wenigstens teilweise in die Haltenut (24) eingreift, wenn das Band (11) so verformt wird, daß es eine im wesentlichen rohrförmige Gestalt annimmt, und wobei die ersten und die zweiten primären Randgebilde (17, 18) eine im wesentlichen gemeinsame neutrale Biegungsebene haben, wenn das Band (11) veranlaßt wird, einer gekrümmten Bahn zu folgen, während es eine im wesentlichen rohrförmige Gestalt hat.

2. Bandförderer nach Anspruch 1, dadurch gekennzeichnet, daß das Förderband (11) zwischen dem ersten (17) der primären Randgebilde und dem sekundären Randgebilde (19) ein Hilfsrandgebilde (22) aufweist, wobei die Haltenut (24) durch einen Raum zwischen den Hilfs- und sekundären Randgebilden (22, 19) gebildet ist.

3. Bandförderer nach Anspruch 1 oder 2, dadurch gekennzeichnet, daß die Bandtrageinrichtung (27) folgendes aufweist: eine primäre Trageinrichung (33) zum Ergreifen des ersten (17) der primären Randgebilde und zum Tragen wenigstens eines Teils des Gewichts des Bands und eine sekundäre Trageinrichtung (31) zum Verhindern einer Querbewegung des zweiten (18) der primären Randgebilde aus der Haltenut (24).

4. Bandförderer nach Anspruch 3, dadurch gekennzeichnet, daß die primäre und die sekundäre Trageinrichtung (33, 31) jeweils in Abständen längs der Länge des Förderbands an Stellen vorgesehen sind, die in Längsrichtung im wesentlichen zusammenfallen.

5. Bandförderer nach Anspruch 2 oder 4, dadurch gekennzeichnet, daß die primäre Trageinrichtung eine geneigte Rolle (36) zum Tragen des ersten primären Randgebildes (17) aufweist, und daß eine zweite Rolle (28) oder eine ähnliche Festlegungseinrichtung so angeordnet ist, daß sie das primäre Randgebilde (17) gegen die geneigte Rolle (36) hält.

6. Bandförderer nach einem der Ansprüche 3 bis 5, dadurch gekennzeichnet, daß das zweite (18) der primären Randgebilde in der Haltenut (24) durch ein Paar von drehbaren Festlegungseinrichtungen (28, 31) eingefangen gehalten ist, zwischen denen die ineinandergreifenden Bandränder (15, 16) hindurchlaufen.

7. Bandförderer nach Anspruch 1 oder 2, dadurch gekennzeichnet, daß die in einandergreifenden Randgebilde (52, 53, 56) in einer einzigen, mit einer Nut versehenen Riemenscheibe (65) durch eine Festlegungseinrichtung (28) gehalten werden, die sowohl für das erste (52) der primären Randgebilde als auch für das sekundäre Randgebilde (53) eine Abstützung bildet.

8. Bandförderer nach einem der vorhergehenden Ansprüche, dadurch gekennzeichnet, daß das sekundäre Bandrandgebilde (19) eine sich in Längsrichtung erstreckende Verstärkungsstruktur aufweist, die einer Zuglast widerstehen kann.

9. Bandförderer nach einem der vorhergehenden Ansprüche, dadurch gekennzeichnet, daß profilierte, einander zugewandte Flächen (29, 29') der Randbereiche ineinandergreifen, um eine gegenseitige Längsbewegung der Randbereiche zu verhindern, wenn das Band eine rohrförmige Gestalt hat.

10. Förderband (11) zur Verwendung in einem Bandförderer, enthaltend eine erste lasttragende Fläche (12) und ein Paar von primären Randgebilden (17, 18) im wesentlichen angrenzend an die jeweiligen Längsränder (15, 16) des Bands,
dadurch **gekennzeichnet,**
daß ein sekundäres Randgebilde (19) auf der lasttragenden Fläche (12) in der Nähe eines ersten (17) der primären Randgebilde und im Abstand hiervon vorgesehen ist zur Bildung einer sich in Längsrichtung erstreckenden Haltenut (24) zur Aufnahme des anderen, zweiten (18) der primären Randgebilde, wenn das Band längs seiner Länge so verformt wird, daß es eine im wesentlichen rohrförmige Gestalt annimmt, wobei die ersten und die zweiten primären Randgebilde (17, 18) jeweils eine sich in Längsrichtung erstreckende, eingebettete, zugfeste Verstärkungsstruktur (25) enthalten, die so angeordnet ist, daß, wenn das Band die rohrförmige Gestalt aufweist und das zweite (18) der primären Randgebilde in der sich in Längsrichtung erstreckenden Haltenut (24) festgelegt ist, die neutrale Biegungsebene des ersten (71) der primären Randgebilde von der zweiten, äußeren Fläche (14) des Bands unterhalb des ersten (17) der primären Randgebilde und des zweiten Randgebildes (19) um im wesentlichen die gleiche Strecke entfernt ist wie der Abstand der neutralen Biegungsebene des zweiten (18) der primären Randgebilde von der zweiten Fläche (14).

11. Förderband nach Anspruch 10. dadurch gekennzeichnet, daß zwischen dem ersten (17) der primären Randgebilde und dem zweiten Randgebilde (19) ein Hilfsrandgebilde (22) vorgesehen ist, um dazwischen die Haltenut (24) zu bilden.

12. Förderband nach Anspruch 10 oder 11, dadurch gekennzeichnet, daß das Förderband ein Randgebilde (17, 18) aufweist, das im Querschnitt die Form eines abgestumpften V hat.

13. Förderband nach einem der Ansprüche 10 bis 12, dadurch gekennzeichnet, daß die Verstärkungsstrukturen (25) des Randgebildes wenigstens einen größeren Teil der zugfesten Verstärkungsstruktur des Bands bilden.

14. Förderband nach einem der Ansprüche 10 bis 13, dadurch gekennzeichnet, daß an ihm eine Laststeuereinrichtung (82) befestigt ist, die bei Gebrauch so angeordnet ist, daß sie eine unerwünschte Bewegung des geförderten Materials stabilisiert und behindert, wenn sich das Band in rohrförmigem Zustand befindet.

15. Förderband nach Anspruch 14, dadurch gekennzeichnet, daß die Laststeuereinrichtung (82) vom zweiten Randgebilde (81) herabhängt.

## Revendications

1. Convoyeur à courroie (10) comprenant une courroie convoyeuse souple sans fin (11) qui présente une première surface de transport de charge (12) et deux formations de bord primaires (17, 18) définies sensiblement à proximité de ses bords longitudinaux (15, 16) respectifs, et des moyens de support de courroie (27) prévus au moins à intervalles dans le sens de la longueur du convoyeur (10), au moins dans une zone de transport de charge, pour venir en contact avec les zones de bord (15, 16) de la courroie et pour coopérer avec les formations de bord (17, 18) afin de fournir un support pour la courroie lorsque celle-ci présente une configuration tubulaire, caractérisé en ce que lesdites formations de bord primaires (17, 18) sont respectivement définies au niveau des zones de bord longitudinales (15, 16) respectives de ladite première surface (12) de la courroie (11) et comportent chacune un renforcement encastré (25) résistant à une tension et s'étendant longitudinalement, une formation de bord secondaire (19) étant prévue sur ladite première surface (12) près d'une première (17) desdites formations de bord primaires et espacée de celle-ci afin de définir au moins en partie une gorge de retenue (24) qui s'étend longitudinalement, pour qu'ainsi, lorsque la courroie (11) est déformée pour adopter une configuration sensiblement tubulaire, l'autre, la seconde (18) des formations de bord primaires coopère au moins en partie avec ladite gorge de retenue (24), et les première et seconde formations de bord primaires (17, 18) ayant un plan de flexion neutre sensiblement commun lorsque la courroie (11) est contrainte à suivre une trajectoire courbe tout en présentant une configuration sensiblement tubulaire.

2. Convoyeur à courroie selon la revendication 1, caractérisé en ce que la courroie convoyeuse (11) comprend une formation de bord auxiliaire (22) entre la première (17) des formations de bord primaires et la formation de bord secondaire (19), ladite gorge de retenue (24) étant définie par un espace situé entre les formations de bord auxiliaire et secondaire (22, 19).

3. convoyeur à courroie selon la revendication 1 ou la revendication 2, caractérisé en ce que les moyens de support de courroie (27) comprennent un moyen de support primaire (33) destiné à venir en contact avec la première (17) des formations de bord primaires et à supporter au moins une partie importante du poids de la courroie, et un moyen de support secondaire (31) destiné à empêcher un déplacement transversal de la seconde (18) des formations de bord primaires par rapport à ladite gorge de retenue (24).

4. Convoyeur à courroie selon la revendication 3, caractérisé en ce que lesdits moyens de support primaire et secondaire (33, 31) sont respectivement prévus à intervalles dans le sens de la longueur de la courroie convoyeuse au niveau de positions qui coïncident sensiblement longitudinalement.

5. Convoyeur à courroie selon la revendication 3 ou la revendication 4, caractérisé en ce que le moyen de support primaire comprend un galet incliné (36) disposé pour supporter la première formation de bord primaire (17), tandis qu'un second galet (28) ou un moyen de positionnement similaire est disposé pour maintenir ladite formation de bord primaire (17) contre ledit galet incliné (36).

6. Convoyeur à courroie selon l'une quelconque des revendications 3 à 5, caractérisé en ce que la seconde (18) des formations de bord primaires est retenue captive dans la gorge de retenue (24) par deux moyens de positionnement rotatifs (28, 31) entre lesquels les bords coopérants (15, 16) de la courroie sont conçus pour passer.

7. Convoyeur à courroie selon la revendication 1 ou la revendication 2, caractérisé en ce que les formations de bord coopérantes (52, 53, 56) sont retenues à l'intérieur d'une seule poulie à gorge (65) par un moyen de positionnement (28) qui fournit un support à la fois à la première (52) des formations de bord primaires et à la formation de bord secondaire (53).

8. Convoyeur à courroie selon l'une quelconque des revendications précédentes, caractérisé en ce que la formation de bord secondaire (19) de la courroie comprend une structure de renforcement qui s'étend longitudinalement et qui est adaptée pour résister à une charge de traction.

9. Convoyeur à courroie selon l'une quelconque des revendications précédentes, caractérisé en ce que, lorsque la courroie (11) présente une configuration tubulaire, des surfaces profilées en vis-à-vis (29, 29') des zones de bord coopèrent pour empêcher un déplacement longitudinal relatif desdites zones de bord.

10. Courroie convoyeuse (11) destinée à être utilisée dans un convoyeur à courroie, comprenant une première surface de transport de charge (12) et deux formations de bord primaires (17, 18) définies sensiblement à proximité de ses bords longitudinaux (15, 16) respectifs, caractérisée en ce qu'une formation de bord secondaire (19) est prévue sur ladite surface de transport de charge (12) près d'une première (17) des formations de bord primaires et espacée de celle-ci afin de définir une gorge de retenue (24) qui s'étend longitudinalement pour recevoir l'autre, la seconde (18) des formations de bord primaires lorsque la courroie est déformée dans le sens de sa longueur pour adopter une configuration sensiblement tubulaire, et chacune des première et seconde formations de bord primaires (17, 18) comprenant une structure de renforcement encastrée (25) résistante à une tension et s'étendant longitudinalement, conçue pour que, lorsque la courroie présente ladite configuration tubulaire, tandis que la seconde (18) des formations de bord primaires est située dans ladite gorge de retenue (24) qui s'étend longitudinalement, le plan de flexion neutre de la première (17) des formations de bord primaires se situe par rapport à la seconde surface extérieure (14) de la courroie, sous-jacente à la première (17) des formations de bord primaires et a la formation de bord secondaire (19), à une distance sensiblement identique à l'écartement du plan de flexion neutre de la seconde (18) desdites formations de bord primaires par rapport à ladite seconde surface (14).

11. Courroie convoyeuse selon la revendication 10, caractérisée en ce qu'une formation de bord auxiliaire (22) est prévue entre la première (17) des formations de bord primaires et la formation de bord secondaire (19) pour définir ladite gorge de retenue (24) entre celles-ci.

12. Courroie convoyeuse selon la revendication 10 ou la revendication 11, caractérisée en ce que la courroie convoyeuse comprend une formation de bord (17, 18) en forme de V tronqué en section transversale.

13. Courroie convoyeuse selon l'une quelconque des revendications 10 à 12, caractérisée en ce que lesdites structures de renforcement (25) des formations de bord définissent au moins une majeure partie de la structure de renforcement résistante à une tension de la courroie.

14. Courroie convoyeuse selon l'une quelconque des revendications 10 à 13, caractérisée en ce qu'elle comporte, assujettis à elle, des moyens de contrôle de charge (82) conçus pour, en service, stabiliser et empêcher un déplacement indésirable d'un matériau transporté lorsque la courroie présente une configuration tubulaire.

15. Courroie convoyeuse selon la revendication 14, caractérisée en ce que lesdits moyens de contrôle de charge (82) pendent depuis la formation de bord secondaire (81).
